# EUROPÄISCHE PATENTSCHRIFT

(11) **EP 2 531 364 B1**
(45) Veröffentlichungstag und Bekanntmachung des Hinweises auf die Patenterteilung: **20.03.2019**
(21) Anmeldenummer: 11711014.8
(22) Anmeldetag: 20.01.2011
(51) Int. Cl.: B60G 21/05

(54) **ACHSMODUL**
AXLE MODULE
MODULE D'ESSIEU

(30) Priorität: 07.02.2010 DE 102010007032; 27.09.2010 DE 102010046541; 26.09.2010 DE 102010046364
(43) Veröffentlichungstag der Anmeldung: 12.12.2012
(73) Patentinhaber: KSM Castings Group GmbH, 31137 Hildesheim (DE)
(72) Erfinder: BUSCHJOHANN, Thomas, 31171 Nordstemmen (DE); KIESEL, Andreas, 09380 Thalheim (DE); ALBINUS, Udo, 08606 Oberhermsgrün (DE)
(74) Vertreter: Patentanwälte Thömen & Körner
(86) Internationale Anmeldenummer: PCT/DE2011/000057
(87) Internationale Veröffentlichungsnummer: WO 2011/095152

(56) Entgegenhaltungen:
- EP-A1- 0 525 663
- EP-A1- 1 184 213
- EP-A2- 1 630 026
- EP-A2- 1 894 762
- WO-A1-2008/144517
- DE-A1- 4 333 694
- DE-A1- 10 064 438
- DE-A1- 10 338 659
- DE-A1- 19 542 523
- DE-A1- 19 603 764
- DE-A1- 19 752 347
- DE-A1- 19 840 134
- DE-A1-102007 039 059
- DE-A1-102008 001 989
- FR-A1- 2 753 931
- GB-A- 2 145 797
- JP-A- 2005 104 222
- US-A- 6 099 084
- US-A1- 2005 057 014
- US-A1- 2006 158 024
- US-A1- 2007 251 742
- US-A1- 2009 032 321
- US-B1- 6 260 645
- US-B1- 6 722 459
- SANTARINI M: "L'ALUMINIUM MOULE DANS L'AUTOMOBILE BILAN & PERSPECTIVES. ALUMINIUMPECHINEY - DIVISION ALLIAGES DE MOULAGE", INGENIEURS DE L'AUTOMOBILE, EDITIONS VB, GARCHES, FR, Nr. 722, 1. Juni 1998 (1998-06-01), Seiten 24-30, XP000774740, ISSN: 0020-1200

## Beschreibung

Die Erfindung bezieht sich auf ein Achsmodul für ein Kraftfahrzeug.

Ein derartiges Achsmodul ist beispielsweise aus der DE 103 59 130 A1 oder US 2009/032321 A1 bekannt.

Verbundlenkerachsen, wie sie beispielsweise allgemein in der DE 195 35 521 A1 offenbart sind, stellen derzeit die üblichen Hinterachsen für Frontantriebs-Pkw dar und bestehen üblicherweise aus zwei Lenkern, insbesondere Längslenkern, die die Räder tragen bzw. mit diesen verbunden sind, und einem Achskörper, insbesondere einem Querprofil, der die beiden Lenker verbindet.

Der Erfindung liegt die Aufgabe zugrunde, ein Achsmodul derart weiter zu bilden, dass das Achsmodul verbesserte fahrdynamische Eigenschaften und verbesserte Komfort- und Akustikeigenschaften aufweist. Der Erfindung liegt außerdem die Aufgabe zugrunde, ein Achsmodul der eingangs genannten Art korrosionsunempfindlicher, besser verarbeitbar sowie kostengünstiger und einfacher herstellbar zu machen. Zudem soll ein Achsmodul der eingangs genannten Art derart weiterentwickelt werden, dass das Gewicht bei gleichzeitig höherer Belastbarkeit verringert wird. Zudem soll eine kompaktere Gesamtkonstruktion des Achsmoduls erhalten werden. Weiterhin soll ein Achsmodul bereit gestellt werden, das in vorteilhafter Weise antreibbar ist.

Erfindungsgemäß wird diese Aufgabe mit einem Achsmodul für ein Kraftfahrzeug, wie in Anspruch 1 beansprucht, erreicht.

Insgesamt kann das Gewicht bei gleichzeitig höherer Belastbarkeit des Achsmoduls verringert werden, wenn wenigstens ein Teil des Achsmoduls, vorzugsweise der Lenker und/oder die Aufnahmevorkehrung, zumindest teilweise aus einem Leichtbauwerkstoff hergestellt ist. Für bestimmte Anwendungsfälle kann ein Leichtmetall als Leichtmaterial vorteilhaft sein. Für andere Anwendungsfälle kann ein Kunststoff als Leichtmaterial vorteilhaft sein. Für wiederum andere Anwendungsfälle kann ein Verbund aus Leichtmetall und Kunststoff vorteilhaft sein. So kann eine kompaktere Gesamtkonstruktion eines antreibbaren Achsmoduls erhalten werden.

Das Leichtmetall kann aus Aluminium, Magnesium, Zink oder aus Legierungen mit einem oder mehreren dieser Metalle bestehen. Für gewisse Einsatzzwecke können ein oder mehrere Teile des Achsmoduls vorteilhaft auch aus Stahl- oder Eisen, insbesondere aus Stahl- oder Eisenguss, bestehen. Für bestimmte Einsatzzwecke kann für ein oder mehrere Teile des Achsmoduls eine Blechkonstruktion vorteilhaft sein.

Es kann von Vorteil sein, wenn der Kunststoff ein Polyamid, insbesondere ein glasfaserverstärktes Polyamid, ist. Vorteilhaft kann aber auch ein Kunststoff aus Polypropylen, insbesondere glasfaserverstärktem Polypropylen, anwendbar sein. Für bestimmte Einsatzzwecke kann es von Vorteil sein, wenn ein Kunststoff eingesetzt wird, der unter der Bezeichnung Ultramid® A3WG10 CR bekannt ist.

Die Aufnahmevorkehrung selbst ist vorzugsweise ein- oder mehrteilig ausgebildet ist. Eine mehrteilige Aufnahmevorkehrung hat den Vorteil, dass zunächst ein Teil der Aufnahmevorkehrung mit dem Lenker verbunden werden kann, anschließend der Antrieb in diesen Teil der Aufnahmevorkehrung eingesetzt und die Aufnahmevorkehrung schließlich mittels eines oder mehrerer weiterer Teile verschlossen werden kann. Auch der Radträger selbst kann ein- oder mehrteilig ausgebildet sein.

Erfindungsgemäss ist wenigstens ein Teil der Aufnahmevorkehrung als Gehäuse für den Antrieb ausgebildet. Es kann vorteilhaft sein, wenn für gewisse Einsatzfälle wenigstens ein Teil des Gehäuses rohrförmig ausgebildet ist. Für bestimmte Einsatzfälle kann es vorteilhaft sein, wenn wenigstens ein Teil des Gehäuses eimerförmig ausgebildet ist. Für andere Einsatzfälle kann es vorteilhaft sein, wenn wenigstens ein Teil des Gehäuses topfförmig ausgebildet ist, und für wieder andere Einsatzfälle kann es vorteilhaft sein, wenn wenigstens ein Teil des Gehäuses glockenförmig ausgebildet ist.

Die über einen Achskörper miteinander verbundenen Lenker können vorteilhaft wenigstens teilweise durch Kleben, durch Schweißen, insbesondere durch Widerstandspunktschweißen, durch Umbördeln vorgegebener Bereiche des Achskörpers, durch Durchsetzfügen bzw. insbesondere Clinchen, durch Stanznieten und/oder durch Verschrauben mit dem Achskörper verbunden sein. Achskörper und Lenker können vorteilhaft ein Hybridleichtbauteil aus Kunststoff und Leichtmetall bilden. Es kann von Vorteil sein, wenn die Lenker aus Kunststoff und der Achskörper aus Leichtmetall bestehen, oder umgekehrt. Die Lenker können vorteilhaft über ein Spritzgussverfahren mit dem Achskörper verbunden sein. Zweckmäßigerweise können die Lenker und/oder der Achskörper so ausgebildet sein, dass die Verbindung vorzugsweise während des Spritzgussverfahrens durch Formschluss erfolgt.

Es kann von Vorteil sein, wenn der Achskörper zumindest teilweise aus einem Leichtmaterial, vorzugsweise aus Leichtmetall, aus Kunststoff oder einem Verbund aus Leichtmetall und Kunststoff hergestellt ist.

Es kann vorteilhaft sein, wenn wenigstens ein Teil der Aufnahmevorkehrung vorzugsweise unlösbar mit dem Lenker verbunden ist. Es kann zweckmäßig sein, wenn zumindest ein Teil der Aufnahmevorkehrung zumindest teilweise mit dem Lenker verbunden, in dem Lenker aufgenommen, insbesondere integriert, und/oder durch den Lenker gebildet ist.

Ein besonderer Vorteil kann darin besehen, dass die Aufnahmevorkehrung, der Lenker und/oder die Abdeckung eine oder mehrere Verstärkungselemente, insbesondere Verstärkungsrippen, -gurte, -sicken, -wulste, -stege und/oder-durchbrüche, vorzugsweise jedoch mehrere Verstärkungsrippen aufweist.

Es kann von Vorteil sein, wenn die Verstärkungselemente sternenförmig radial auf der Außenseite des Aufnahmevorkehrung und/oder der Abdeckung verlaufen.

Der Antrieb kann vorteilhafterweise ein Antriebsmotor sein. Insbesondere kann es von Vorteil sein, wenn der Antrieb ein Elektromotor ist.

Besonders vorteilhaft kann es sein, wenn der Antrieb ein Radnabenmotor ist.

Der Radnabenmotor hat den Vorteil, dass der klassische Antriebsstrang mit Getriebe, Differential und Antriebswellen wegfallen kann und eine Steigerung der Effizienz durch den Wegfall der verschiedenen Übersetzungen und damit der Reibungsverluste erreicht wird.

Vorzugsweise kann der Radnabenmotor zugleich als Radnabengenerator ausgebildet sein, wobei eine mit den Radnabenmotor bzw. -generator in Wirkverbindung stehende elektrische Steuerung vorgesehen sein kann, mit der der Radnabenmotor bzw. -generator zwischen einem Motorbetrieb, in dem auf das entsprechende Rad eine Antriebskraft ausgeübt wird, und einem Generatorbetrieb, in dem mit dem sich drehenden Rad elektrische Energie erzeugt wird, umschaltbar ist.

Es kann vorteilhaft sein, wenn zumindest ein Teil der Aufnahmevorkehrung oder ein mit dem Lenker verbundener, im Lenker aufgenommener, insbesondere integrierter, und/oder durch den Lenker gebildeter Teil der Aufnahmevorkehrung als Statorträger ausgebildet ist.

Insbesondere kann es von Vorteil sein, wenn zumindest ein Teil der Aufnahmevorkehrung einstückig mit dem Lenker ausgebildet ist.

Es kann zweckmäßig sein, wenn zumindest ein Teil der Aufnahmevorkehrung oder ein mit dem Lenker verbundener, im Lenker aufgenommener, insbesondere integrierter, und/oder durch den Lenker gebildeter Teil der Aufnahmevorkehrung das Gehäuse für den Antrieb bildet, der als Elektromotor mit Innenläufer ausgebildet ist, wobei das Gehäuse fest mit dem Stator verbunden ist, diesen trägt und/oder bildet und der Rotor innerhalb des Stators als Innenläufer rotiert.

Es kann zweckmäßig sein, wenn zumindest ein Teil der Aufnahmevorkehrung oder ein mit dem Lenker verbundener, im Lenker aufgenommener, insbesondere integrierter, und/oder durch den Lenker gebildeter Teil der Aufnahmevorkehrung einen insbesondere tellerförmigen Träger für den Stator des als Elektromotor mit Außenläufer ausgebildeten Antriebs aufweist. Es kann vorteilhaft sein, wenn der insbesondere tellerförmige Träger fest mit dem Stator verbunden ist und der Rotor, der insbesondere glockenförmig ausgebildet sein kann, als Außenläufer außerhalb des Stators rotiert.

Es kann besonders vorteilhaft sein, wenn benachbart der Aufnahmevorkehrung eine Bremsenanordnung angeordnet ist. Vorzugsweise kann die Bremsenanordnung innerhalb des durch die Aufnahmevorkehrung gebildeten Gehäuses des Antriebs integriert sein.

Dies kann sowohl dann zweckmäßig sein, wenn der Antrieb ein Elektromotor mit Innenläufer, aber auch wenn der Antrieb ein Elektromotor mit Außenläufer ist.

Es kann besonders vorteilhaft sein, wenn benachbart der Aufnahmevorkehrung eine Hauptbremse angeordnet ist. Vorzugsweise kann diese an dem durch die Aufnahmevorkehrung gebildeten Gehäuse des Antriebs bzw. dessen Abdeckung angeordnet sein.

Dies kann dann besonders zweckmäßig sein, wenn der Antrieb ein Elektromotor mit Innenläufer ist.

Aus Bauraumgründen kann eine solche Hauptbremse als Trommelbremse ausgebildet sein. Bei dieser Hauptbremse kann es sich um eine mechanische Bremse handeln, welche vorteilhaft entfallen kann, wenn elektrische Bremsen zugelassen sind. Dann kann eine in der Aufnahmevorkehrung integrierte Feststellbremse, insbesondere in Form einer Trommelbremse, die Anforderungen erfüllen.

Weiterhin kann es von Vorteil sein, wenn die Abdeckung eine oder mehrere Bohrungen, Kanäle oder Aussparungen aufweist, welche Brems- und/oder Kühlleitungen bilden oder durch welche Brems- und/oder Kühlleitungen geführt sind.

Es kann aber auch von Vorteil sein, wenn die Lenker, die Aufnahmevorkehrungen und/oder Radträger eine oder mehrere Bohrungen, Kanäle oder Aussparungen aufweisen, welche Brems- und/oder Kühlleitungen bilden oder durch welche Brems- und/oder Kühlleitungen geführt sind.

Besonders vorteilhaft kann es sein, wenn die Rotationsachsen von Rad und Antrieb zusammenfallen, also koaxial angeordnet sind.

Für einige Anwendungen kann es vorteilhaft sein, wenn der Achskörper auf der Höhe der Rotationsachsen angeordnet ist. Für andere Anwendungen kann es vorteilhaft sein, wenn der Achskörper zwischen den Rotationsachsen und der Anlenkung zur Befestigung der Lenker am Fahrzeugaufbau angeordnet ist. Für wieder andere Anwendungen kann es vorteilhaft sein, wenn der Achskörper auf der Höhe der Anlenkung zur Befestigung des Lenkers am Fahrzeugaufbau angeordnet ist.

Weiterhin kann es vorteilhaft sein, wenn wenigstens ein Teil der Aufnahmevorkehrung in einem Gießverfahren gefertigt ist. Insbesondere kann es vorteilhaft sein, wenn der Lenker mit zumindest einem Teil der Aufnahmevorkehrung als einstückig gegossenes Bauteil hergestellt ist. Weiterhin kann es vorteilhaft sein, wenn wenigstens ein Teil des Radträgers in einem Gießverfahren gefertigt ist. Insbesondere kann es vorteilhaft sein, wenn der Lenker mit zumindest einem Teil des Radträgers als einstückig gegossenes Bauteil hergestellt ist.

Vorteilhaft weist der Lenker weiterhin eine insbesondere einstückig mit diesem verbundene, vorzugsweise durch ein Gießverfahren hergestellte Stossdämpferaufnahme zur Befestigung eines Stossdämpfers zwischen Lenker und dem Fahrzeugaufbau auf.

Es kann vorteilhaft sein, wenn der Lenker weiterhin eine insbesondere einstückig mit diesem verbundene, vorzugsweise durch ein Gießverfahren hergestellte Federauflage oder - aufnahme zur Aufnahme einer entsprechenden Feder, insbesondere Schraubenfeder, aufweist.

Diese einzelnen, an den Lenkern des Achsmoduls angeordneten Aufnahmen können aber für bestimmte Einsatzzwecke auch durch Verschrauben, Verschweißen, Materialabtragung oder dergleichen an den Lenkern befestigt sein.

Besonders zweckmäßig kann es sein, wenn wenigstens ein Teil der Aufnahmevorkehrung oder ein gegossenes Bauteil des Achsmoduls durch Squeeze-Casting, Gegendruck-Kokillenguss (CPC), Druckguss, insbesondere durch Thixo-, Rheo- und Niederdruck-Sandguss, oder durch Schwerkraft-Kokillenguss hergestellt ist. Es kann auch Vorteilhaft sein, wenn wenigstens ein Teil der Aufnahmevorkehrung oder ein gegossenes Bauteil des Achsmoduls im Spritzgussverfahren hergestellt ist.

Vorteilhaft bezieht sich die Erfindung auf solche Achsmodule, deren jeweiliger Lenker starr mit dem Radträger ausgebildet ist. Zweckmäßigerweise kann hierbei der Radträger insbesondere einstückig mit dem Lenker, insbesondere Längslenker, verbunden, in diesem aufgenommen, insbesondere integriert, und/oder durch diesen gebildet sein. Vorteilhaft kann zumindest ein Teil des Radträgers einstückig mit dem Lenker, insbesondere Längslenker, verbunden, in diesem aufgenommen, insbesondere integriert, und/oder durch diesen gebildet sein.

Besonders vorteilhaft und zweckmäßig kann es sein, wenn das Achsmodul als Verbundlenkerachse ausgebildet ist.

Der Begriff Verbundlenkerachse ist weit gefasst. Für bestimmte Einsatzzwecke kann es sich hierbei vorteilhaft um eine so genannte Torsionskurbel- bzw. -lenkerachse handeln. Für andere Einsatzzwecke kann es sich vorteilhaft um eine so genannte Koppellenkerachse handeln. Für wieder andere Einsatzfälle kann es sich um eine Verbundlenkerachse im engeren Sinne handeln. Von Torsionskurbelachse wird gesprochen, wenn die Querverbindung, insbesondere der Achskörper, sehr nah zur Radmitte liegt und damit ähnliche Eigenschaften einer Starrachse aufweist. Von Verbundlenkerachse im engeren Sinne wird gesprochen, wenn die Querverbindung, insbesondere der Achskörper, nahe zur Längslenkerlagerung liegt und damit ähnliche Eigenschaften einer Längslenkerachse aufweist. Von Koppellenkerachse wird gesprochen, wenn sich die Querverbindung, insbesondere der Achskörper, etwa am vorderen Drittel der Längslenker befindet und damit Vorteile der Längslenker- mit den Verbundlenkerachsen im engeren Sinne vereint.

Es kann vorteilhaft sein, wenn die Verbundlenkerachse einen in Fahrzeugquerrichtung ausgerichteten, biegesteif und torsionsweich ausgebildeten Achskörper oder Querträger und zwei in Fahrzeuglängsrichtung ausgerichtete, biege- und torsionssteif ausgebildete Lenker, insbesondere Längslenker, umfasst. Es kann vorteilhaft sein, wenn deren in Fahrzeuglängsrichtung betrachtet weitestgehend vorderen Enden fest mit dem Achskörper oder Querträger verbunden sind und an deren hinteren Enden jeweils die erfindungsgemäß vorgesehene Aufnahmevorkehrung zur Aufnahme des Antriebs angeordnet ist, wobei der Antrieb mit dem an der Aufnahmevorkehrung gelagerten Rad in Wirkverbindung steht.

Für gewisse Anwendungen kann es besonders vorteilhaft und zweckmäßig sein, wenn das Achsmodul als Längslenkerachse oder als Zentrallenkerachse, wie sie beispielsweise derzeit im BMW Mini verwendet wird, ausgebildet ist.

Für bestimmte Anwendungen kann es besonders vorteilhaft und zweckmäßig sein, wenn das Achsmodul als Starrachse ausgebildet ist.

Für manche Anwendungen kann es besonders vorteilhaft und zweckmäßig sein, wenn das Achsmodul als Schräglenkerachse oder als Schraubenlenkerachse ausgebildet ist.

Es kann vorteilhaft sein, wenn das Achsmodul als angetriebene Hinterachse eines zwei- oder mehrachsigen Kraftfahrzeugs ausgebildet ist. Somit lässt sich auf einfache Weise insbesondere ein Allradantrieb realisieren, wobei die Vorderachse beispielsweise mit Hilfe eines Verbrennungsmotors angetrieben sein kann.

Die Lenker können vorzugsweise zusammen mit wenigstens einem Teil der Aufnahmevorkehrung im Gießverfahren hergestellt sein. Für bestimmte Einsatzzwecke kann es auch zweckmäßig sein, wenn die Lenker aus einem oder mehreren Spritzguss-, Strangpress-, Strangguss- oder Gussprofilen hergestellt sind. Für gewisse Anwendungsfälle kann es vorteilhaft sein, wenn wenigstens ein Teil der Aufnahmevorkehrung aus wenigstens einem Spritzguss-, Strangpress-, Strangguss oder Gussprofil hergestellt ist.

Der Achskörper kann vorteilhaft als T-, V- oder U-Profil oder als Rohrprofil mit vorzugsweise eingedrücktem Querschnitt in C-Form ausgebildet sein. Letztere Form sorgt für verbesserte Bedingungen im Verbindungsbereich zu den Lenkern bzw. den Längslenkern. Der Achskörper kann vorteilhaft aus einem Spritzguss-, Strangpress-, Strangguss- oder Gussprofil hergestellt sein.

Die Aufnahmevorkehrung kann vorteilhaft an einem Ende des Lenkers angeordnet sein. Am anderen Ende des Lenkers kann eine Aufnahme, vorzugsweise in Form einer Buchse, für Befestigungsmittel zur Befestigung des Achsmoduls am Fahrzeugaufbau angeordnet sein.

Es kann vorteilhaft sein, wenn der Lenker eine Aufnahme zur Befestigung des Achskörpers aufweist.

Vorteilhaft lässt sich das erfindungsgemäße Achsmodul in einem Elektrofahrzeug oder einem Hybridfahrzeug verwenden. Als Hybridfahrzeug ist ein Fahrzeug mit herkömmlichen Vorderachsantrieb und erfindungsgemäßen Hinterachsantrieb bevorzugt.

Weitere Einzelheiten und vorteilhafte Ausgestaltungen der Erfindung ergeben sich aus der nachfolgenden Beschreibung in Verbindung mit der Zeichnung. In dieser zeigen
- Fig. 1: eine perspektivische Ansicht eines erfindungsgemäßen Achsmoduls eines Kraftfahrzeugs (für Elektromotor mit Innenläufer),
- Fig. 2: einen Ausschnitt aus einer perspektivischen Ansicht eines erfindungsgemäßen Achsmoduls eines Kraftfahrzeugs (für Elektromotor mit Innenläufer),
- Fig. 3: eine perspektivische Ansicht eines erfindungsgemäßen Achsmoduls samt Rädern (für Elektromotor mit Innenläufer), ,
- Fig. 4: eine perspektivische Ansicht eines erfindungsgemäßen Achsmoduls eines Kraftfahrzeugs (für Elektromotor mit Außenläufer),
- Fig. 5: einen Ausschnitt aus einer perspektivischen Ansicht eines erfindungsgemäßen Achsmoduls eines Kraftfahrzeugs (für Elektromotor mit Außenläufer),
- Fig. 6: einen Ausschnitt aus einer perspektivischen Ansicht eines erfindungsgemäßen Achsmoduls eines Kraftfahrzeugs (für Elektromotor mit Außenläufer),
- Fig. 7: eine perspektivische Ansicht eines erfindungsgemäßen Achsmoduls eines Kraftfahrzeugs (für Elektromotor mit Außenläufer),,
- Fig. 8: eine perspektivische Ansicht eines erfindungsgemäßen Achsmoduls samt Rädern (für Elektromotor mit Außenläufer),
- Fig. 9: eine Schnittansicht des radtragenden Bereichs eines Achsmoduls mit Elektromotor mit Innenläufer sowie außen liegender Haupt- und innen liegender Feststellbremse,
- Fig. 10: eine Schnittansicht des radtragenden Bereichs eines Achsmoduls mit Elektromotor mit Innenläufer sowie außen liegender Hauptbremse,
- Fig. 11: eine Schnittansicht des radtragenden Bereichs eines Achsmoduls mit Elektromotor mit Innenläufer sowie innen liegender Feststellbremse und
- Fig. 12: eine Schnittansicht des radtragenden Bereichs eines Achsmoduls mit Elektromotor mit Außenläufer sowie innen liegender Feststellbremse.

Um Wiederholungen zu vermeiden, werden in den Figuren gleiche Bezugszeichen verwendet, sofern diese gleiche Bauteile bezeichnen.

Die Fahrzeuglängsrichtung des Kraftfahrzeugs ist durch einen Pfeil FL, und die Fahrzeugquerrichtung durch einen Pfeil FQ dargestellt.

Die Verbundlenkerachse 10 umfasst im Wesentlichen einen in Fahrzeugquerrichtung FQ ausgerichteten Achskörper 12 oder Querträger sowie einen ersten und einen zweiten jeweils in Fahrzeuglängsrichtung FL ausgerichteten Längslenker 14, 16. Der Achskörper 12 ist beispielsweise biegesteif und torsionsweich ausgebildet, während der erste Längslenker 14 und der zweite Längslenker 16 beispielsweise biege- und torsionssteif ausgebildet sind.

Der erste und zweite Längslenker 14, 16 weisen jeweils ein vorderes Ende 14a, 16a und ein hinteres Ende 14b, 16b auf. Die vorderen Enden 14a, 16a der Längslenker 14, 16 sind fest mit dem Achskörper 12 verbunden.

An den hinteren Enden 14b, 16b der Längslenker 14, 16 ist erfindungsgemäß eine Aufnahmevorkehrung für einen Elektromotor, insbesondere für einen Radnabenmotor, vorgesehen. Die Aufnahmevorkehrung ist dabei so ausgebildet, dass sie den Träger 26, 36 für den Stator 38 bildet.

Die Erfindung unterscheidet in den dargestellten Ausführungsbeispielen zwischen zwei Varianten eines Achsmoduls 10 mit erfindungsgemäßer Aufnahmevorkehrung. Die Aufnahmevorkehrung ist entweder für einen Elektromotor mit Außenläufer 40 oder für einen Elektromotor mit Innenläufer 42 ausgebildet.

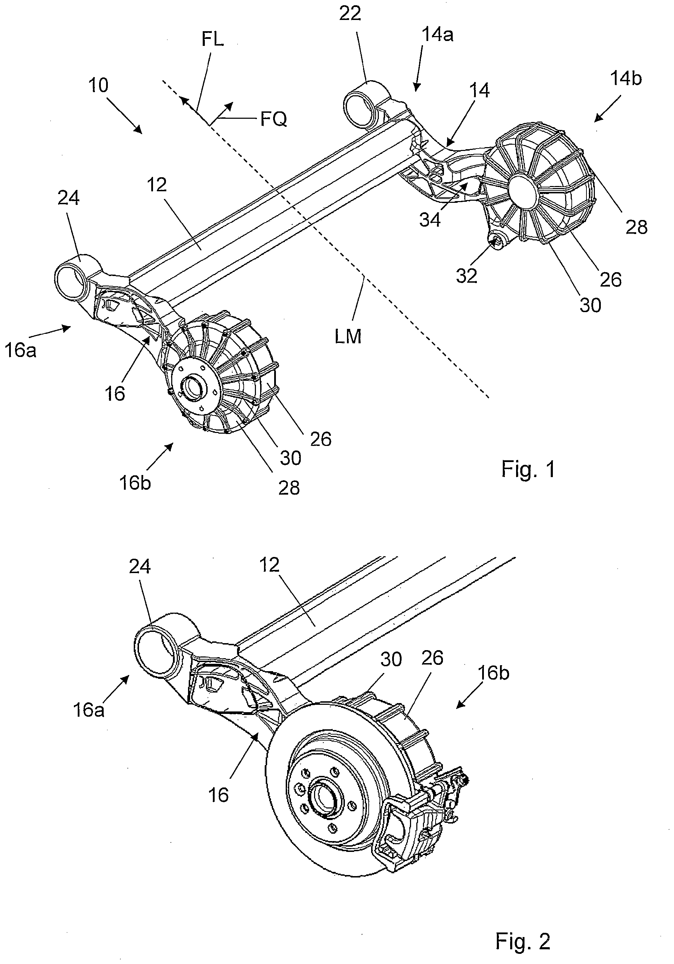

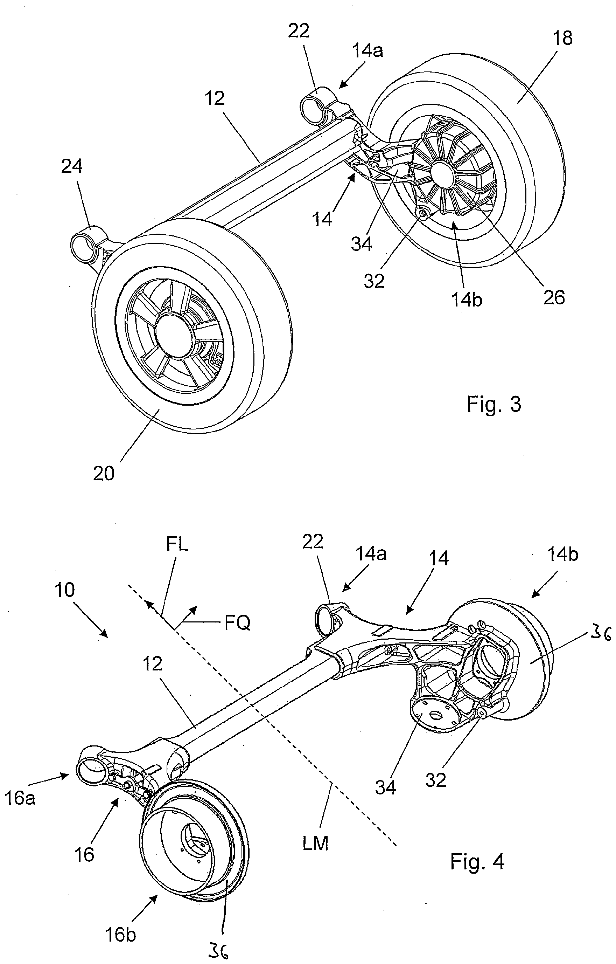

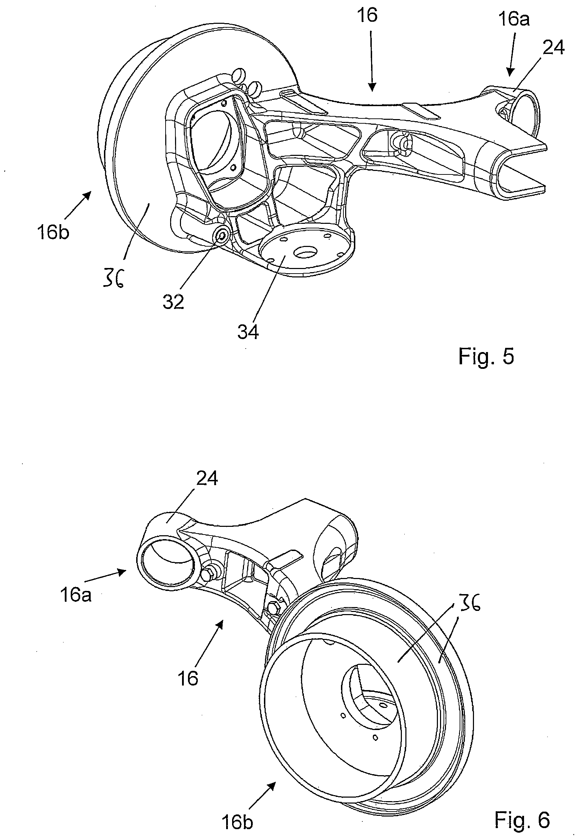

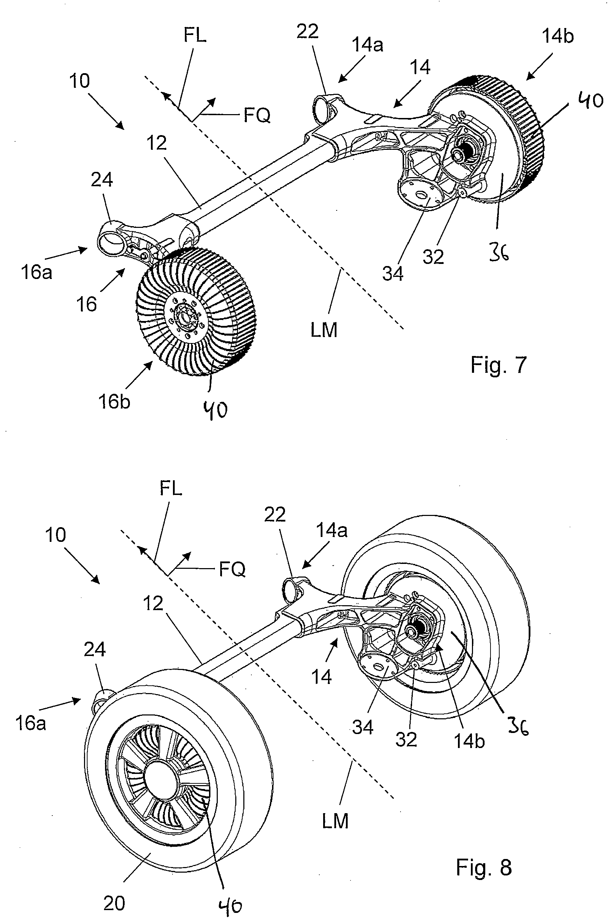

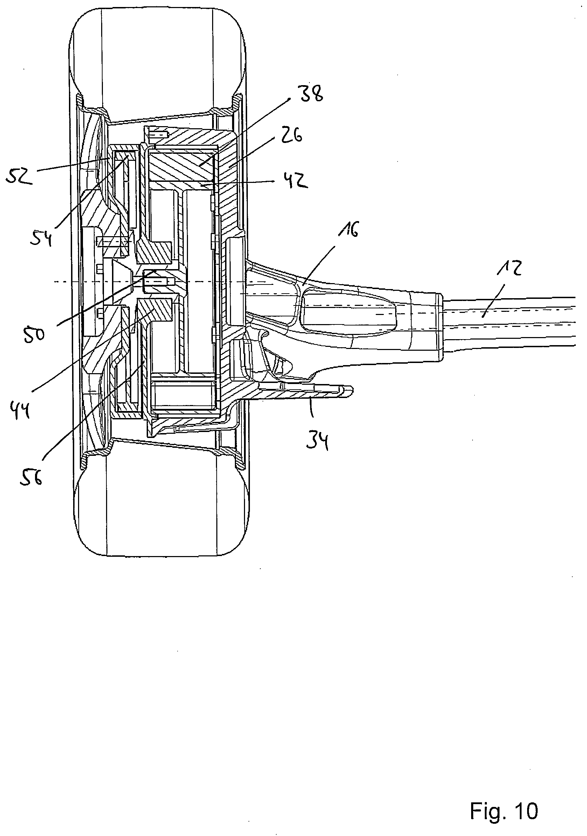

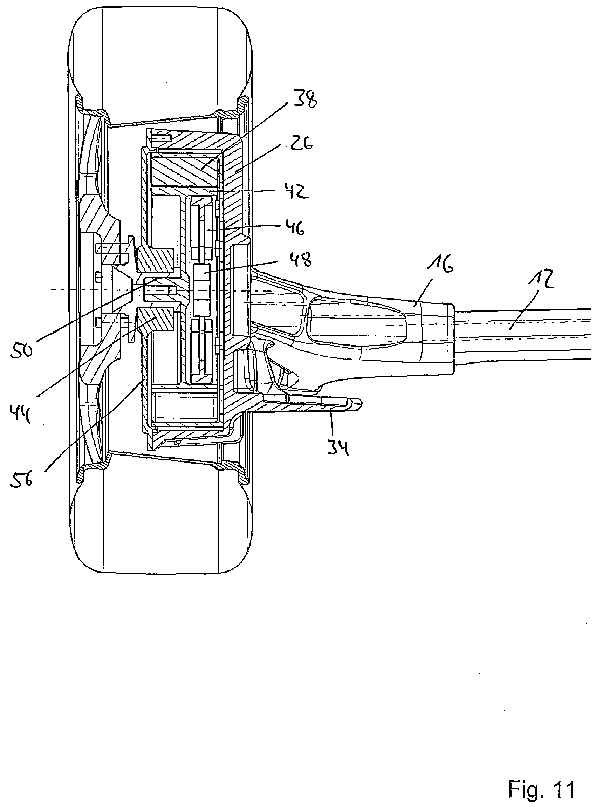

In den Figuren 1 bis 3 sowie Fig. 9 bis 11 sind Achsmodule bzw. Ausschnitte hiervon mit einer Aufnahmevorkehrung für einen Elektromotor mit Innenläufer 42 dargestellt, während in den Fig. 4 bis 8 sowie 12 Achsmodule bzw. Ausschnitte hiervon mit einer Aufnahmevorkehrung für einen Elektromotor mit Außenläufer 40 dargestellt sind.

In den Figuren 1 bis 3 sowie Fig. 9 bis 11 ist in jedem Längslenker 16 eine Aufnahmevorkehrung in Form eines topfförmigen Gehäuseteil 26 zur Aufnahme eines Radnabenmotors angeordnet, wobei der Radnabenmotor in Wirkverbindung mit dem jeweils anzutreibenden Rad 18, 20 steht. Der topfförmige Gehäuseteil 26 ist mittels einer Abdeckung 28 verschließbar. Die topfförmigen und abdeckenden Gehäuseteile 26, 28 weisen mehrere die Steifigkeit des Lenkers erhöhende Verstärkungsrippen 30, welche auf der jeweiligen Außenseite sternenförmig verlaufen. Die Gehäuseteile 26, 28 sind vorzugsweise miteinander verschraubt.

Der Radnabenmotor ist hierbei als Elektromotor mit Innenläufer ausgebildet, wobei das Gehäuseteil 26 das Gehäuse des Elektromotors bildet, welches mit dem Wicklungen aufweisenden Stator 38 fest verbunden ist bzw. diesen trägt, wobei der Dauermagnete aufweisende Rotor 40 des Elektromotors als Innenläufer innerhalb des Stators 38 rotiert.

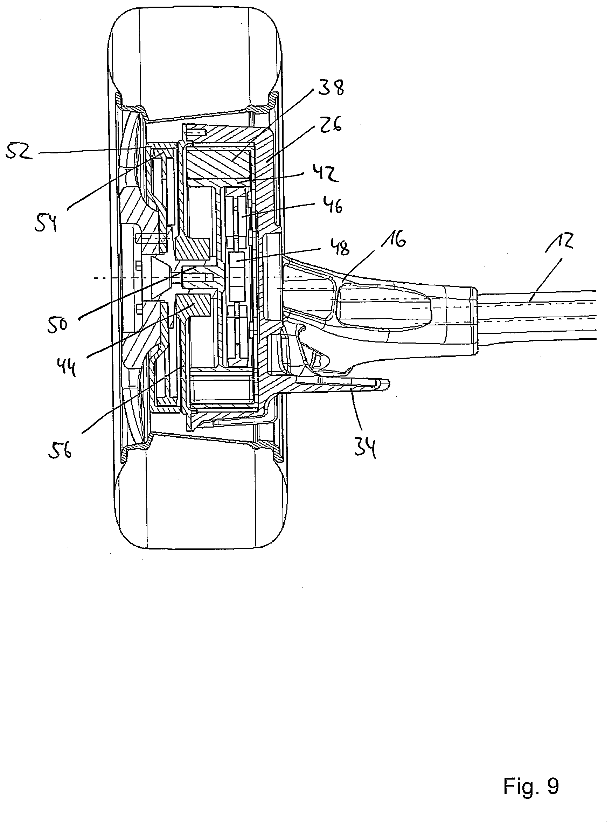

Weitere Bauteile des Radnabenmotors mit Innenläufer und deren erfindungsgemäße Anordnung, insbesondere der Bremsanordnungen, sind den Figuren 9 bis 11 sehr gut zu entnehmen. Die folgenden Bezugsziffern bezeichnen hierbei folgende Bauteile:
- 44: Radlager
- 46: Bremsbacke mit Bremsbelag (integrierte Feststellbremse)
- 48: Bremsnocken (integrierte Feststellbremse)
- 50: Kerbverzahnung für Momentenübertragung
- 52: Bremstrommel (Hauptbremse)
- 54: Bremsbacke mit Bremsbelag (Hauptbremse)
- 56: Bremsträger = Abdeckung 28 (Hauptbremse)

In den Figuren 4 bis 8 sowie Fig. 12 ist in jedem Längslenker 16 eine Aufnahmevorkehrung in Form eines tellerförmigen Gehäuseteil 36 als Träger für den Stator des Radnabenmotors angeordnet, wobei der Radnabenmotor in Wirkverbindung mit dem jeweils anzutreibenden Rad 18, 20 steht. Der Radnabenmotor ist hierbei als Elektromotor mit Außenläufer 40 ausgebildet, wobei das Gehäuseteil 36 den so genannten Stator des Elektromotors trägt, wobei der so genannte Rotor 40 außerhalb des Stators 36 rotiert.

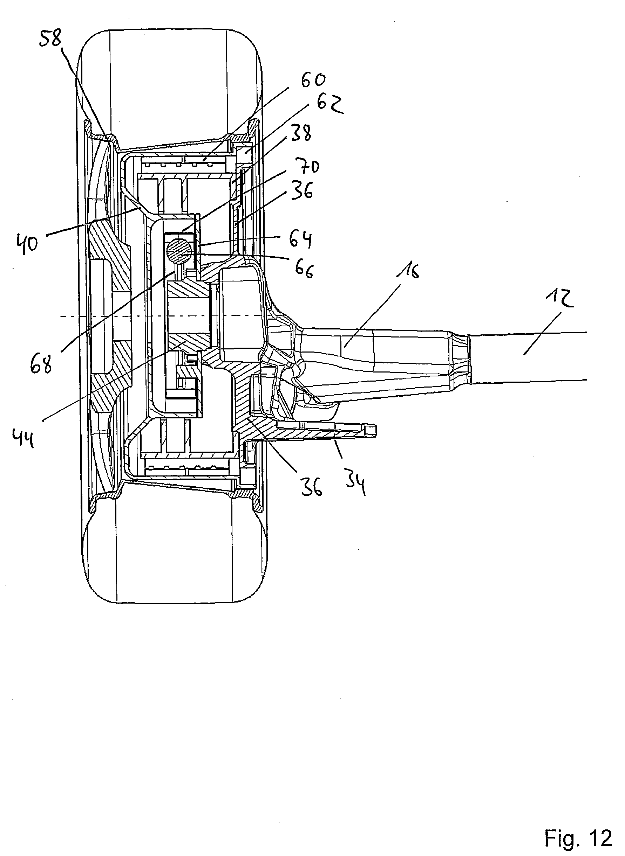

Weitere Bauteile des Radnabenmotors mit Außenläufer und deren erfindungsgemäße Anordnung, insbesondere der Bremsanordnung, sind Fig. 12 sehr gut zu entnehmen. Die folgenden Bezugsziffern bezeichnen hierbei folgende Bauteile:
- 58: Felge
- 60: Dauermagnet
- 62: Dichtung
- 64: Trägerblech für Trommel (Feststellbremse)

- 66: Bremszylinder (Feststellbremse)
- 68: Bremsbacke (Feststellbremse)
- 70: Bremsbelag

Jedes der Räder 18, 20 der Verbundlenkerachse 10 wird durch einen einzelnen Radnabenelektromotor angetrieben. Vorzugsweise ist jedes der beiden einzeln angetriebenen Räder 18, 20 hierbei gesondert ansteuerbar, wodurch unterschiedliche Antriebskräfte übertragbar sind und sich ein elektronischen Stabilitätsprogramm sowie Fahrdynamikregelungen realisieren lassen.

Die Verbundlenkerachse 10 ist mit den, an den vorderen Enden 14a, 16a der Längslenker 14, 16 noch vor dem Anbindungsbereich des Achskörpers 12 angeordneten, vorzugsweise einstückig mit den Längslenkern 14, 16 verbundenen Buchsen 22, 24 am hier nicht dargestellten Aufbau des Kraftfahrzeugs befestigt.

Jeder Längslenker 14, 16 weist jeweils eine einstückig mit diesem verbundene Stossdämpferaufnahme 32 zur Befestigung eines Stossdämpfers zwischen dem Längslenker 14, 16 und dem Fahrzeugaufbau auf. Jeder Längslenker 14, 16 weist zudem jeweils eine einstückig mit diesem verbundene Federaufnahme 34 zur Aufnahme einer entsprechenden Feder, insbesondere einer Schraubenfeder, auf.

Die Erfindung ist nicht auf das Ausführungsbeispiel beschränkt, sondern im Rahmen der Offenbarung vielfach variabel. Alle neuen, in der Beschreibung und/oder Zeichnung offenbarten Einzel- und Kombinationsmerkmale können erfindungswesentlich sein.

## Patentansprüche

1. Achsmodul (10) für ein Kraftfahrzeug, bestehend aus zwei Längslenkern (14, 16), die am Fahrzeugaufbau über je eine Anlenkung (22, 24) befestigbar sind, die Räder der Achse tragen und über einen Achskörper (12) miteinander verbunden sind, wobei jeder der Längslenker (14, 16) eine Aufnahmevorkehrung für einen Antrieb aufweist, wobei wenigstens ein Teil (26) der Aufnahmevorkehrung als Gehäuse (26) für den Antrieb ausgebildet ist, wobei das Gehäuse (26) eine zum Rad hin weisende Öffnung aufweist, die nach Aufnahme des Antriebs mit einer Abdeckung (28) als weiteren Teil der Aufnahmevorkehrung verschließbar ist, wobei der Achskörper (12) nicht am Gehäuse (26), sondern zwischen der Rotationsachse des Antriebs und der Anlenkung (22, 24) zur Befestigung des Längslenkers (14, 16) am Fahrzeugaufbau angeordnet ist, **dadurch gekennzeichnet, dass** wenigstens ein Teil (26) der Aufnahmevorkehrung zumindest teilweise durch den Längslenker (14, 16) gebildet ist, wobei der Längslenker (14, 16) mit dem wenigstens einen Teil (26) der Aufnahmevorkehrung als in einem Stück gegossenes und damit starres Bauteil hergestellt ist.

2. Achsmodul nach Anspruch 1, **dadurch gekennzeichnet, dass** dieses zumindest teilweise aus einem Leichtmaterial hergestellt ist.

3. Achsmodul nach Anspruch 1, **dadurch gekennzeichnet, dass** wenigstens ein Teil des Gehäuses rohr-, eimer-, topf- oder glockenförmig ausgebildet ist.

4. Achsmodul nach einem der Ansprüche 1 bis 3, **dadurch gekennzeichnet, dass** der Antrieb ein Elektromotor ist.

5. Achsmodul nach Anspruch 1, **dadurch gekennzeichnet, dass** die Abdeckung (28) eine oder mehrere Bohrungen, Kanäle oder Aussparungen aufweist, welche Brems- und/oder Kühlleitungen bilden oder durch welche Brems- und/oder Kühlleitungen geführt sind.

6. Achsmodul nach einem der Ansprüche 1 bis 5, **dadurch gekennzeichnet, dass** die Längsenker, die Aufnahmevorkehrungen und/oder die Radträger eine oder mehrere Bohrungen, Kanäle oder Aussparungen aufweisen, welche Brems- und/oder Kühlleitungen bilden oder durch welche Brems- und/oder Kühlleitungen geführt sind.

7. Achsmodul nach einem der Ansprüche 1 bis 6, **dadurch gekennzeichnet, dass** wenigstens ein Teil der Aufnahmevorkehrung oder ein gegossenes Bauteil des Achsmoduls durch Squeeze-Casting, Gegendruck-Kokillenguss (CPC), Druckguss, insbesondere durch Thixo-, Rheo- und Niederdruck-Sandguss, oder durch Schwerkraft-Kokillenguss hergestellt ist.

8. Achsmodul nach einem der Ansprüche 1 bis 7, **dadurch gekennzeichnet, dass** das Achsmodul als angetriebene Hinterachse eines zwei- oder mehrachsigen Kraftfahrzeugs ausgebildet ist.

9. Achsmodul nach Anspruch 1, **dadurch gekennzeichnet, dass** der Längslenker eine mit diesem verbundene Stoßdämpferaufnahme zur Befestigung eines Stoßdämpfers zwischen Lenker und dem Fahrzeugaufbau aufweist.

10. Achsmodul nach Anspruch 1, **dadurch gekennzeichnet, dass** der Lenker eine mit diesem verbundene Federauflage oder -aufnahme zur Aufnahme einer Feder, insbesondere Schraubenfeder, aufweist.

## Claims

1. Axle module (10) for a motor vehicle, consisting of two trailing arms (14, 16) which can be fastened to the vehicle body via in each case one linkage (22, 24), support the wheels of the axle, and are connected to one another via an axle beam (12), each of the trailing arms (14, 16) having a receptacle measure for a drive, at least one part (26) of the receptacle measure being configured as a housing (26) for the drive, the housing (26) having an opening which points towards the wheel and, after receiving the drive, can be closed by way of a cover (28) as a further part of the receptacle measure, the axle beam (12) not being arranged on the housing (26), but rather being arranged between the rotational axle of the drive and the linkage (22, 24) for fastening the trailing arm (14, 16) to the vehicle body, **characterized in that** at least one part of the receptacle measure is formed at least partially by way of the trailing arm (14, 16), the trailing arm (14, 16) being produced with the at least one part (26) of the receptacle measure as a component which is cast in one piece and is therefore rigid.

2. Axle module according to Claim 1, **characterized in that** it is produced at least partially from a lightweight material.

3. Axle module according to Claim 1, **characterized in that** at least one part of the housing is of tubular, bucket-shaped, pot-shaped or bell-shaped configuration.

4. Axle module according to one of Claims 1 to 3, **characterized in that** the drive is an electric motor.

5. Axle module according to Claim 1, **characterized in that** the cover (28) has one or more bores, channels or cut-outs which form brake lines and/or cooling lines or through which brake lines and/or cooling lines are routed.

6. Axle module according to one of Claims 1 to 5, **characterized in that** the trailing arms, the receptacle measures and/or the wheel supports have one or more bores, channels or cut-outs which form brake lines and/or cooling lines or through which brake lines and/or cooling lines are routed.

7. Axle module according to one of Claims 1 to 6, **characterized in that** at least one part of the receptacle measure or a cast component of the axle module is produced by squeeze casting, counter pressure casting (CPC), high pressure die casting, in particular by way of thixocasting, rheocasting and low pressure sand casting, or by way of gravity die casting.

8. Axle module according to one of Claims 1 to 7, **characterized in that** the axle module is configured as a driven rear axle of a two-axle or multiple-axle motor vehicle.

9. Axle module according to Claim 1, **characterized in that** the trailing arm has a shock absorber mount which is connected to it for fastening a shock absorber between the trailing arm and the vehicle body.

10. Axle module according to Claim 1, **characterized in that** the trailing arm has a spring base or support which is connected to it for receiving a spring, in particular a coil spring.

## Revendications

1. Module d'essieu (10) pour un véhicule automobile, se composant de deux bras longitudinaux (14, 16), qui peuvent être fixés à la carrosserie du véhicule chacun par une articulation (22, 24), qui portent les roues de l'essieu et qui sont reliés l'un à l'autre par un corps d'essieu (12), dans lequel chacun des bras longitudinaux (14, 16) présente un montage de réception pour un entraînement, dans lequel au moins une partie (26) du montage de réception est formée par un boîtier (26) pour l'entraînement, dans lequel le boîtier (26) présente une ouverture tournée vers la roue, qui peut, après la réception de l'entraînement, être fermée avec un couvercle (28) en tant qu'autre partie du montage de réception, dans lequel le corps d'essieu (12) n'est pas disposé sur le boîtier (26) mais entre l'axe de rotation de l'entraînement et l'articulation (22, 24) destinée à la fixation du bras longitudinal (14, 16) à la carrosserie du véhicule, **caractérisé en ce qu'**au moins une partie du montage de réception est formée au moins en partie par le bras longitudinal (14, 16), dans lequel le bras longitudinal (14, 16) est fabriqué sous forme de composant coulé d'une pièce et dès lors rigide avec ladite au moins une partie (26) du montage de réception.

2. Module d'essieu selon la revendication 1, **caractérisé en ce que** celui-ci est fabriqué au moins en partie en un matériau léger.

3. Module d'essieu selon la revendication 1, **caractérisé en ce qu'**au moins une partie du boîtier est réalisée en forme de tube, de seau, de pot ou de cloche.

4. Module d'essieu selon l'une quelconque des revendications 1 à 3, **caractérisé en ce que** l'entraînement est un moteur électrique.

5. Module d'essieu selon la revendication 1, **caractérisé en ce que** le couvercle (28) présente un(e) ou plusieurs trou(s), canal/canaux ou découpe(s), qui forme(nt) des conduites de freinage et/ou de refroidissement ou à travers lesquels des conduites de freinage et/ou de refroidissement sont menées.

6. Module d'essieu selon l'une quelconque des revendications 1 à 5, **caractérisé en ce que** les bras longitudinaux, les montages de réception et/ou les supports de roues présentent un(e) ou plusieurs trou(s), canal/canaux ou découpe(s), qui forme(nt) des conduites de freinage et/ou de refroidissement ou à travers lesquels des conduites de freinage et/ou de refroidissement sont menées.

7. Module d'essieu selon l'une quelconque des revendications 1 à 6, **caractérisé en ce qu'**au moins une partie du montage de réception ou un composant coulé du module d'essieu est fabriqué par squeeze-casting, par coulée en coquille avec contre-pression (CPC), par coulée sous pression, en particulier par thixo-coulée, par rhéo-coulée et par coulée en sable à basse pression, ou par coulée en coquille par gravité.

8. Module d'essieu selon l'une quelconque des revendications 1 à 7, **caractérisé en ce que** le module d'essieu est réalisé sous la forme d'un essieu arrière entraîné d'un véhicule automobile à deux ou plusieurs essieux.

9. Module d'essieu selon la revendication 1, **caractérisé en ce que** le bras longitudinal présente un logement d'amortisseur relié à celui-ci pour la fixation d'un amortisseur entre le bras longitudinal et la carrosserie de véhicule.

10. Module d'essieu selon la revendication 1, **caractérisé en ce que** le bras longitudinal présente un appui ou un logement de ressort relié à celui-ci, pour le logement d'un ressort, en particulier d'un ressort hélicoïdal.
